# EUROPEAN PATENT APPLICATION

(11) **EP 2 282 439 A1**
(43) Date of publication of application: **09.02.2011**
(21) Application number: 09305714.9
(22) Date of filing: 30.07.2009
(51) Int. Cl.: H04L 5/14

(54) **Automatic detection of physical layer configuration parameters for dsl user-access devices**

(71) Applicant: Thomson Licensing, 92130 Issy-les-Moulineaux (FR)
(72) Inventor: Dong, Hong, 92648, BOULOGNE cedex (FR)
(74) Representative: Berthier, Karine

(57) **Abstract**

Implementations of the present principles include systems and methods for automatically detecting physical layer configuration parameters for customer premise equipment on a DSL network. Exemplary implementations can employ a search space including a plurality of different, interdependent configuration parameters and can improve detection efficiency by contracting (524) the search space based on analysis of standard central office responses to synchronization attempts. In particular, unattempted configuration parameter values can be removed (524) from the search space by making deductions based on central office responses in accordance with a predefined set of rules. Efficiency can be further improved by merging (530) the search spaces of physical layer devices in response to determining that they share the same configuration parameters.

## Description

### TECHNICAL FIELD

The present principles generally relate to digital subscriber line access technology, and more particularly, to systems and methods for automatically detecting central office physical layer parameters for user-device configuration.

### BACKGROUND

With the continuing development of Digital Subscriber Line (DSL) technology and the addition of new features associated with technological advancement, the configuration of user-devices has progressively become a difficult task. In particular, the number and variety of configuration parameters for the physical layer (PHY) in DSL technologies, such as Single-pair High-speed DSL (SHDSL), has increased dramatically due to the introduction of features such as Ethernet in the First Mile Transmission Convergence Layer ('EFM TC') and the addition of more pairs in SHDSL technology. As a result, the added features have imposed additional interoperability requirements between different types of central offices (CO) and customer premise equipment (CPE) devices. Because the CPE devices must be configured in accordance with the specific physical layer parameters of a particular type of CO during initial startup and connection of CPE devices to a DSL network, auto-detection of CO physical layer parameters in the CPE and automatic setting of configuration parameter values in the CPE have become important aspects of the configuration and setup process.

A current standard for determining PHY configuration parameters at the CPE includes ITU-T G.994.1 for DSL PHY, which describes a handshake procedure permitting the exchange of PHY parameters. However, ITU-T G.994.1 is limited in that handshake procedures between different ITU-T G.994.1 revisions are incompatible. For example, the Capability List and Request ('CLR') message formats for different revisions are incompatible. Moreover, the procedure lacks definitions for interoperability parameters that enable CPEs to interoperate with different, non-standard COs. Thus, a G.994.1 handshake session typically cannot provide the CPE with sufficient means to determine CO PHY configuration parameters.

Known methods for detecting physical layer parameters of various COs also include configuring the CPE to attempt every possible configuration parameter combination to find the parameter configuration employed by the CO to which the CPE is trying to connect. However, due to the increasing number and variety of PHY configuration parameters employed in DSL technologies such as SHDSL, attempting every possible parameter configuration is time consuming and inefficient, as it can require up to several minutes to complete. Other known methods include manual configuration of CPE equipment. However, these methods are inconvenient for the user and are susceptible to error due to the complex nature of the configuration.

Other methods include a method for detecting virtual path (VP) and virtual circuit (VC) ranges supported by a central office, one type configuration parameter, as discussed in U.S. Patent No. 7,310,342 ("342'). The method essentially comprises determining Virtual Path and Virtual Circuit ranges supported by a central office by applying a ping on various Virtual Paths and Virtual Circuits. A VP and VC is deemed supported by the CO if the CO responds to the ping. However, VP and VC are not PHY configuration parameters and are not part of the PHY layer. Furthermore, '342's ping process is inadequate in providing a means for detecting a broad range of different configuration parameters with complex interdependencies which are necessary to permit a customer device to connect to a DSL network.

### SUMMARY

Thus, there is a need for a system and method for automatically detecting PHY configuration parameters associated with COs and setting a CPE in accordance with the parameters in a manner that is more efficient and convenient than configuration processes currently employed in the art.

The present principles advantageously address the deficiencies of the prior art by providing systems and methods for automatically detecting PHY configuration parameters for DSL user-access devices. Rather than attempting every possible combination of every configuration parameter to determine PHY specifications of a central office, exemplary aspects of the present principles include eliciting standard responses from a central office and using pre-defined rules to deduce which parameters are valid or invalid. Furthermore, central office responses can also be analyzed to shrink a parameter search space during the detection process and adjust tentative CPE PHY configuration settings, thereby reducing detection time and improving efficiency. The process can be iterated until CPE PHY configuration parameters are determined and the CPE and CO are synchronized on the physical layer.

In one exemplary implementation of the present principles, a method for automatically detecting CO physical layer configuration parameters on a DSL network includes initiating physical layer synchronization with the CO over the DSL network with CPE configured in accordance with a configuration point in a search space, the search space including different, interdependent physical layer configuration parameters; analyzing a CO response to the initiated synchronization to determine at least one of: whether at least one parameter value in the search space is correct or whether at least one parameter value in the search space is incorrect; removing at least one unattempted configuration parameter from said search space in response to said analyzing; and repeating said initiating, analyzing and removing steps with the CPE configured in accordance with a different configuration point in said search space to determine the CO physical layer configuration parameters.

In an alternate exemplary implementation of the present principles, a system for automatically detecting CO physical layer configuration parameters on a digital subscriber line DSL network includes at least one PHY device configured to provide at least one pair connection to the CO; and at least one auto-detection process module configured to execute an auto-detection processes by configuring said at least one PHY device in accordance with a configuration point in a search space, the search space including different, interdependent physical layer configuration parameters, initiating physical layer synchronization with the CO over the DSL network with said configured PHY device, analyzing a CO response to the initiated synchronization to determine at least one of: whether at least one parameter value in the search space is correct or whether at least one parameter value in the search space is incorrect, removing at least one unattempted configuration parameter from said search space in response to said analyzing, and repeating said initiating, analyzing and removing with the PHY devices configured in accordance with a different configuration point in said search space to determine the CO physical layer configuration parameters.

It should be understood that although the present principles are described primarily within the context of an SHDSL system and a CPE device, the specific embodiments of the present principles should not be treated as limiting the scope of the invention. For example, it should be understood that certain aspects of the present principles can be applied to detect configuration parameters on other layers besides the physical layer in view of the teachings disclosed herein.

### BRIEF DESCRIPTION OF THE DRAWINGS

The teachings of the present principles can be readily understood by considering the following detailed description in conjunction with the accompanying drawings, in which:
FIG. 1 is a block/flow diagram illustrating a system for automatically detecting central office physical layer configuration parameters on a digital subscriber line network in accordance with one exemplary implementation of the present principles.
FIG. 2 is a tree representation of PHY configuration parameters reflecting interdependent relationships in accordance with one exemplary implementation of the present principles.
FIGS. 3A and 3B are a tree representation of a PHY configuration parameter value search space in accordance with one exemplary implementation of the present principles.
FIG. 4 is block/flow diagram illustrating a method for analyzing a central office response to determine PHY configuration parameters in accordance with one exemplary implementation of the present principles.
FIG. 5 is a block/flow diagram illustrating a method for automatically detecting central office physical layer configuration parameters on a digital subscriber line network in accordance with one exemplary implementation of the present principles.

It should be understood that the drawings are for purposes of illustrating concepts of the present principles and are not necessarily the only possible configuration for illustrating the invention. To facilitate understanding, identical reference numerals have been used, where possible, to designate identical elements that are common to the figures.

### DETAILED DESCRIPTION

Exemplary embodiments of the present principles include novel systems and methods for automatically detecting remote CO physical layer parameters in CPE devices. In accordance with exemplary aspects of the present principles, remote COs can be viewed as several groups of PHY layer connections, with each group associated with a set of configuration parameters in a configuration space. The configuration space can form the searching space for a CPE configured to automatically detect CO configuration parameters in accordance with the present principles. The searching space can be represented in CPE auto-detection software as a PHY parameter value tree that reflects the dependencies between parameter values. Employing such a tree structure minimizes the searching space, thereby improving efficiency and speed of parameter detection during initial configuration of the CPE device. As discussed herein below, the CPE can configure itself with an initial configuration point in the searching space. Using the initial configuration point, the CPE can attempt a tentative start up procedure with its associated configuration to determine parameter information from a standard response provided by the CO. Based on analysis of the response and determination of parameter information, the CPE modem can adjust its configuration and can shrink the searching space to permit efficient detection of remaining parameters that have not yet been discovered. In turn, if parameter information cannot be obtained from the response, the CPE can determine configuration parameters by attempting synchronization using the remaining parameter values in the searching space it is currently employing. The CPE can repeat the process and update its configuration until all PHY links are synchronized with the CO.

Utilizing aspects of the present principles as described herein provides many advantages. For example, the configuration process is fast and efficient, as it analyzes regular responses provided by a CO to determine and eliminate possible parameter values. Furthermore, the CPE physical layer configuration is fully automatic, thereby providing ease and convenience for a user and reducing the probability of error. In addition, because the CPE can readily adapt to any change or update in configuration parameters, central control of SHDSL physical layers at a central office is facilitated. Moreover, in accordance with the present principles, the CPE modem can automatically select interoperability modes when connecting to different COs, thereby permitting wide compatibility with various types of COs.

With reference now to the figures, it should be understood that the functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future (i.e., any elements developed that perform the same function, regardless of structure).

Thus, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudocode, and the like represent various processes which can be substantially represented in computer readable media and so executed by a computer or processor, whether or not such computer or processor is explicitly shown.

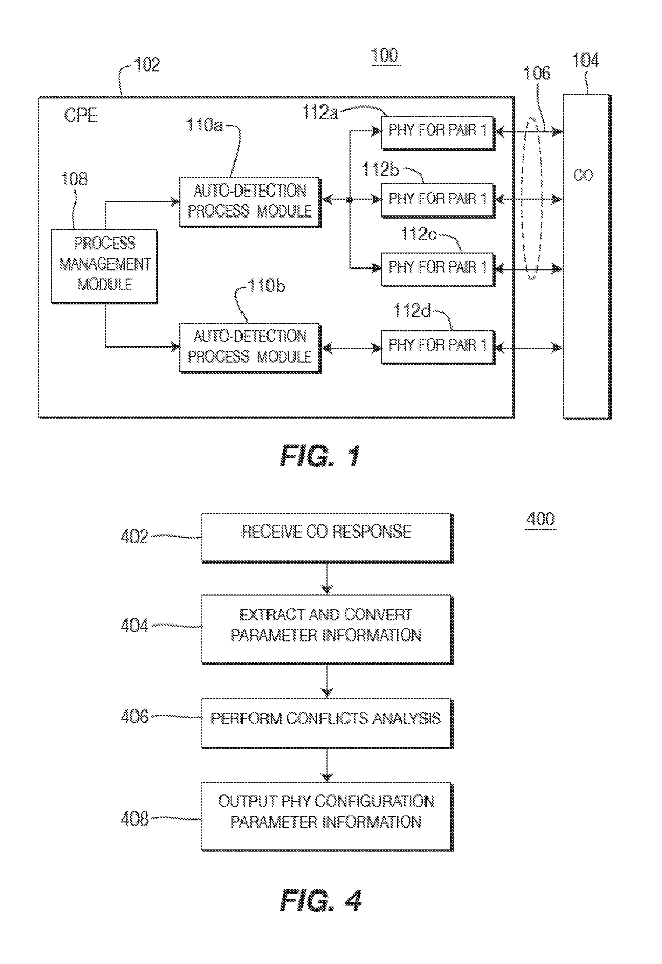

Referring now in specific detail to the drawings in which like reference numerals identify similar or identical elements throughout the several views, and initially to FIG. 1, an exemplary system 100 for detecting PHY configuration parameters in a CPE is illustrated. System 100 can include a plurality of CPEs 102, although one is shown here for ease of understanding, a central office 104 and multiple pair connections 106 between them. CPE 102 can, for example, correspond to an SHDSL CPE using multiple copper pair connections (e.g., maximum 4 pairs) and supporting multiple Transmission Convergence layer ('TC') modes. The TC is a sub-layer of SHDSL PHY. A CPE 102 can include a process management module 108, a plurality of auto-detection process modules 110a, 110b and a plurality of PHY devices 112a-112d. Although only two auto-detection process modules and four PHY devices 112a-112d are shown, it should be understood that different numbers of such modules and devices can be employed in accordance with design choice. Each PHY device provides a separate pair connection to the CO 104. Here, the physical layer should be understood to correspond to a physical layer in the Open Systems Interconnections ('OSI') reference model, which is widely used in standard communications and computer network protocol designs. In the particular configuration shown in FIG. 1, the four PHY devices form two groups, with PHY devices 112a-c corresponding to a first group and PHY device 112d corresponding to a second group. After CO PHY configuration parameters are determined, each group operates in accordance with its own independent set of configuration parameters. Thus, each group can be controlled by an associated auto-detection process, which is described more fully below.

In the exemplary embodiment illustrated in FIG. 1, the detection function operations can be split between the process management module and the auto-detection process modules. An auto-detection process module can be configured to determine the configuration parameters for a group of PHY devices by sending configuration messages to the PHY devices within the group and activating start-up procedures for the PHY devices. Thereafter, an auto-detection module can be configured to collect CO response information and analyze the response information using predefined rules to determine PHY configuration parameters, as discussed more fully below. Additionally, an auto-detection process module can be configured to report CO response information to the process management module, if necessary. Further, current configuration point values, described more fully below, and the searching space for a group can be maintained by an auto-detection process module. The process management module can, in turn, be configured to generate auto-detection processes, merge the auto-detection processes and schedule their execution. In addition, the process management module can determine the grouping of the PHY devices based on CO response information or analysis reported from the auto-sensing process modules.

To facilitate the auto-detection process, a searching space for PHY configuration parameters should be constructed. As discussed below, when the auto-detection process is initiated, a searching space can be defined for each PHY device. However, as the auto-detection process progresses, the processes can be merged so that the searching space is defined for one group of PHY devices to expedite the detection. Here, a separate searching space should exist for each group.

The search space can be comprised of different, interdependent physical layer configuration parameters, each of which are set to enable the CPE to access the DSL network. In addition, all possible parameter-value-combinations of a CO SHDSL PHY group can form a search space. Parameter values can include capability ('CAP') list style, which is a style of format or coding scheme of the CLR message which is exchanged during a DSL PHY handshake procedure. In the exemplary implementation of the search space disclosed here, there are two styles: the "IEEE 802.3a"' style or "new" style corresponding to EFM+ATM feature; and the "g.shdsl" style or "old" style corresponding to the ATM only feature. Other parameter values can include pair mode, rate, power, etc.

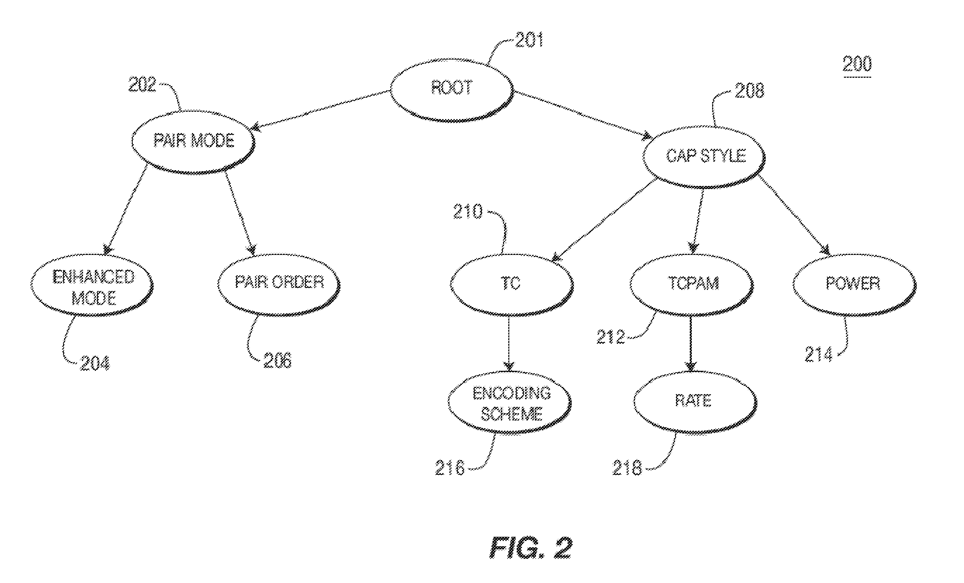

Because values of parameters in the searching space have interdependent relationships, a tree can be used to represent a search space. An example of a search space tree 200 is provided in FIG. 2, illustrating interdependencies between various parameters. The tree 200 can be referred to as a "parameter interdependent relationship tree" or a "parameter tree" for brevity. In exemplary tree 200, the root 201 can branch to pair mode information 202, which in turn can branch to enhanced mode 204, indicating whether enhanced mode is enabled, and pair order information 206. The "enhanced mode" is a mode describing how messages are exchanged among multi-pairs during an SHDSL PHY handshake procedure. It is a proprietary mode which is used by some vendors in their CO PHY. In contrast, a "standard mode" is a mode in which messages are exchanged only on the master pair.

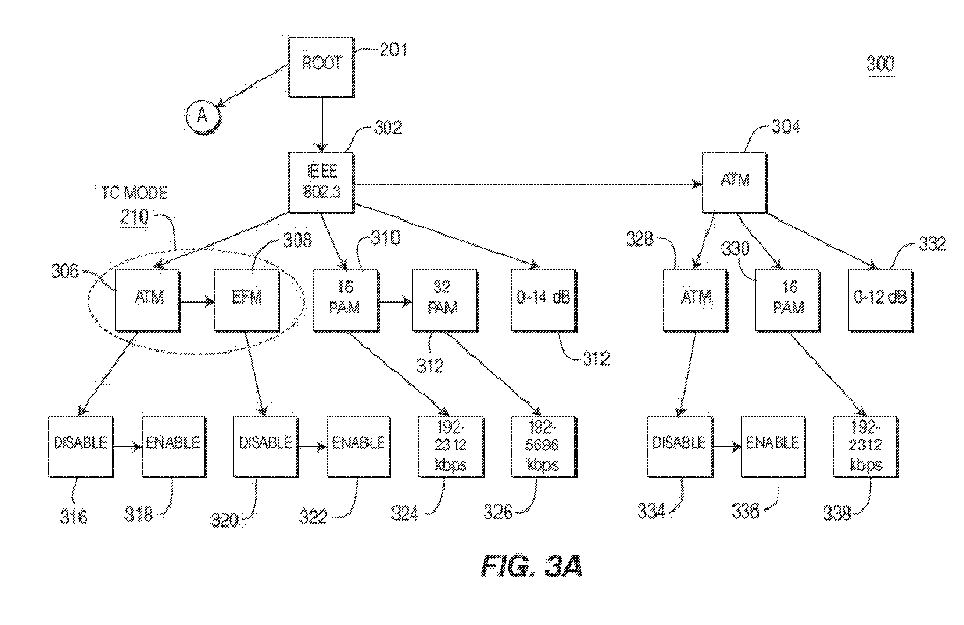

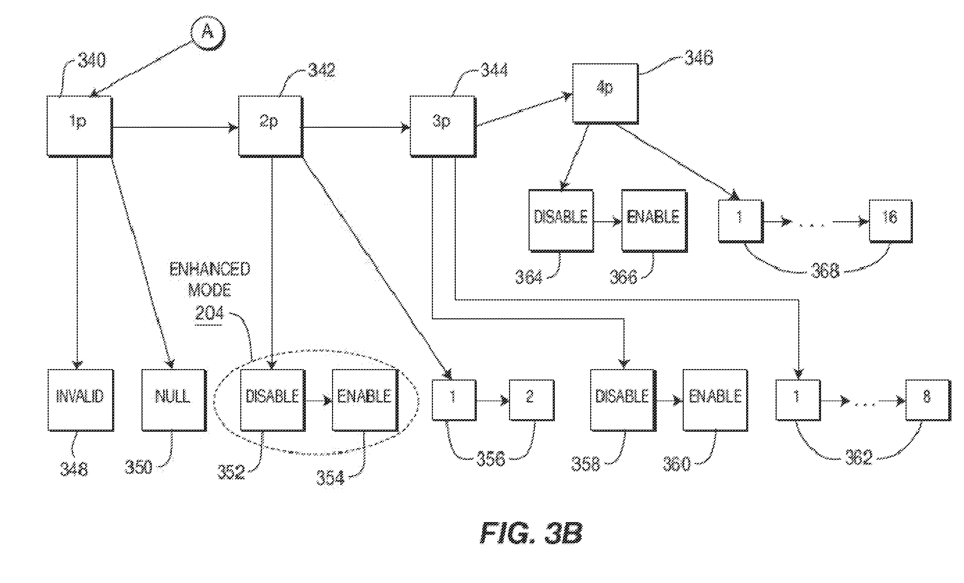

Returning to tree 200, the root can branch to CAP style, which in turn branches to more specific parameters such as TC information 210, Trellis Coded Pulse Amplitude Modulation (TCPAM) information 212 and Power information 214. The branches themselves can branch to yet more specific parameters such as encoding scheme type 216 for the TC branch 210 and rate information 218 for the TCPAM branch. Based on the tree, the parameters can be instantiated to include parameter values, as shown, for example, in FIGS. 3A and 3B.

Referring now to FIGS. 3A and 3B, an exemplary PHY configuration parameter relationship tree 300 with instantiated parameters for a search space is illustrated. Tree 300 reflects the interdependent relationships between the parameter values and is an extension of the tree 200 in FIG.2. Tree 300 can be referred to as "parameter value interdependent relationship tree" or as a "parameter value tree" for brevity. The parameter nodes of tree 200 were replaced with a listing of all possible parameter values and children for each parameter value node were added while retaining the interdependent relationships among parameters.

For example, the CAP style branch 208 can be instantiated with "new" or "IEEE 802.3ah" 302 and "old" or "g.shdsl" 304 values. The TC 210 branch can in turn be instantiated with Asynchronous Transfer Mode (ATM) 306 and Eight-to-Fourteen Modulation (EFM) 308 values. The TCPAM branch 212 can, for example, be instantiated with 16 Pulse Amplitude Modulation (PAM) 310 and 32 PAM 312, and the power branch 214 can be instantiated with power values between 0-14 dB 314. Similarly, the ATM branch 306 can be instantiated with "disable" 316 and "enable" 318 values, the EFM branch 308 can, in turn, be instantiated with "disable" 320 and "enable" 322 parameter values, the 16 PAM branch 310 can be instantiated with values 324 in the range of 192 kbps-2312 kbps, the 16 PAM branch 312 can be instantiated with values 326 in the range of 192 kbps-5696 kbps. As shown in tree 300, the g.shdsl 304 value can branch to ATM 328, 16 PAM 330 and power values 332, which in turn, can be instantiated with disable 334 and enable 336 values, values 338 in the range of 192 kbps-2312 kbps, and power values between 0-12 dB 332, respectively. In addition, pair mode 202 can be instantiated with 1 pair 340, 2 pairs 342, 3 pairs 344 and 4 pairs 346, for example, which can in turn branch to instantiated values of enhanced mode 204 corresponding to invalid 348, disable 352 and enable 354, disable 358 and enable 360, and disable 364 and enable 366, respectively. Further, pair modes 340, 342, 344 and 346 can branch to pair mode values 350, 356, 362 and 368, respectively. It should be noted that values having the same parameter type and sharing the same parent node can form a link list.

Node field definitions in the partially instantiated tree are illustrated in Table 1, below, and can easily be programmed and automatically generated with reference to the instantiated tree 300, as understood by those of ordinary skill in the art in view of the present principles. The number of pointers in the "pointers to child" field depends on the node type.

**TABLE 1**

| Parameter name | Parameter value | Pointers to child | Next |
|---|---|---|---|
| Pair mode | 1p | Invalid, NULL | 2p |
| Pair mode | 2p | Disable, 1 | 3p |
| Pair mode | 3p | Disable, 1 | 4p |
| Pair mode | 4p | Disable, 1 | None |
| ... | | | |
| CAP style | IEEE 802.3 style | ATM, 16PAM, 0-14dB | ATM style |
| CAP style | ATM style | ATM, 16PAM, 0-12dB | none |
| TC mode | ATM | Disable | EFM |
| ... | | | |

Table 2, shown below, provides an example of a program definition of "parameter name" and "parameter value."

**TABLE 2**

| | |
|---|---|
| enum parameterName= | {TC_mode, pair_mode, caplist_style, TCPAM, rate, power, enhanced_mode}; |
| enum parameterValue= | {EFM,ATM, 1pair, 2pair, 3pair, 4pair, old, new, 16TCPAM, 32TCPAM, 192k, 200k, 384k, ... 5696k, 0dbm, 1dbm, ..., 14dbm, enable, disable, invalid}; |

The search space described above can be constructed with or without remote CO information such as the chipset vendor, the firmware version, TC modes supported, etc. However, as much information about the CO as possible should be obtained to minimize the searching space and, thus, improve the efficiency of configuration parameter detection. Accordingly, the full search space can be constructed, inapplicable nodes can be removed in accordance with remote CO information, and the tree can be instantiated as discussed above.

An important concept of the present principles is a "configuration point," which is defined herein as a unique combination of parameter values in a search space, an example of which is provided in FIGS. 3A and 3B. In other words, using the tree search space discussed above, a configuration point is the combination of nodes along a path from root to leaf in both the left sub-tree (FIG. 3B) and the right-sub-tree (FIG. 3A). Here, the configuration point can represent a sequence of parameter values for different parameters. As illustrated in Table 3, below, a configuration point can be implemented with an array having the names for different parameters as the index and having the corresponding parameter values stored in the array elements. In the array, the first element can correspond to the pair mode of the number of pair connections, the second element can correspond to the pair order, the third element can correspond to ATM enhanced mode, etc.

**TABLE 3**

| | | | |
|---|---|---|---|
| 4 pair | 1, 2, 3, 4 | Disabled | .... |

With the search space constructed, the auto-detection process can begin by attempting to synchronize with the CO using an initial configuration point. The initial configuration point can be a pre-determined set of values and can be determined from prior knowledge of DSL Access Multiplexer (DLSAM) information, for example. After attempting to synchronize with the CO, the CPE should receive a CO response which can be analyzed by an auto-detection process module.

As discussed more fully below, in the case of a failed configuration point, the analysis can indicate that certain parameter values are correct or incorrect. As a result, the search space can be shrunk by deleting nodes from the space, for example. In exemplary implementations, if an attempted configuration point has failed, analyzation of CO response can yield three results: a) the field or fields of the configuration point that caused the failure cannot be determined; b) the field or fields of the configuration point that caused the failure (i.e., incorrect or mismatched fields) can be determined, but the correct parameter value or values of the field or fields causing the failure cannot be determined; or c) the field or fields of the configuration point that caused the failure can be determined and the correct parameter value or values of the field or fields causing the failure can also be determined. For result (a), the search space can be shrunk by removing or deleting the failed configuration point. A configuration point is removed by deleting one or more nodes or parameter values from the search space. Prior to deleting one or more nodes, the erroneous field can be determined by varying the values of different fields and thereby attempting different configuration points to discover the fields and/or field values that caused the failure. For results (b) and (c), in addition shrinking the search space by removing a configuration point, the search space can also be shrunk by deducing which nodes/values are excluded or not true based on CO responses and deleting all subtrees rooted by excluded nodes or values. For example, referring to FIGS. 2 and 3A-B, if the TC mode parameter 210 is determined to be "ATM," then the sub tree rooted by the "EFM" node should be deleted. Because such deletions greatly reduce the nodes and paths in the instantiated tree, search and detection efficiency is significantly improved. Deletion of a node can be performed by freeing the memory of the node or tagging the node as invalid, for example.

Using CO response analysis, configuration point parameters can be updated and the process can be repeated until all parameters are determined. During the process, if CO response analysis does not indicate that any nodes are correct or incorrect, then the search can simply be confined to all remaining nodes and configuration points in the search space until the correct combination is achieved, as indicated by a successful synchronization with the CO.

With reference to FIG. 4, to analyze CO responses, using, for example, auto-detection process modules, an extract and convert function can be applied to determine PHY configuration parameters from CO responses. For example, in method 400, illustrated in FIG. 4, a CO response can be received at step 402 and parameter information can be extracted and converted, in step 404, to standard, predetermined formats that enable further analysis. At step 406, parameter conflicts analysis can be performed for single or multiple PHY devices and resulting PHY configuration parameter information including incorrect and/or correct parameter values can be output at step 408 to, for example, a process management module. Thus, parameter information can be analyzed to determine whether configuration point parameters are correct, determine any conflicting or incorrect parameters, and determine the correct values of conflicting parameters.

Parameter information can be extracted from CO responses in step 404 by, for example, determining the phase of a startup procedure in which a failure occurred due to a parameter conflict or error. For example, a set of phases in which a failure can potentially occur can include a tone phase, a g.handshake ('g.hs') message exchange phase (a specification of ITU-T G.994.1, for example), and a training phase. Other parameter information extracted from the CO response can include a PHY chipset vendor identification, which can be extracted from a CAP list message from the CO, and the existence of a g.hs message, which indicates that a g.hs message exchange procedure occurs on a wire line connected to a PHY device.

The parameter information can be analyzed at step 406 using a set of pre-defined mapping rules to determine an erroneous configuration point parameter that prompted the CO response. For example, a rule can be that a CAP list style parameter is erroneous if a failure occurred in the g.hs message exchange phase. Another rule can be that if a g.hs message exists, a pair mode is determined to be 2 pair and a TC mode is determined to be ATM, then an "enable" parameter value for the ATM Enhanced parameter is correct. However, it should be noted that other parameter information and rules can be used as understood by those of ordinary skill in the art in light of the teachings disclosed herein.

For example, other rules can involve analyzing Capability List ('CL') messages from CO to determine chipset vendor information, from which PHY configuration parameters can be deduced. For example, some known CO PHY chipset vendors only employ limited features, such as an ATM TC mode. Thus, the TC mode can be deduced by matching the chipset vendor fields in a CL message to a list of known vendors and associated vendor specifications. CL messages can also be analyzed to determine chipset firmware version, which can also be used to deduce

PHY configuration parameters in a similar manner. For example, known firmware versions can include specific features and associated set of possible PHY configuration parameters which can be compiled in a list and compared to extracted chipset firmware information from CL messages. In addition, some CO PHY parameter values can be directly indicated in CL response messages received from a CO, which can also be used to determine and set configuration parameters.

It should be understood that the analysis can be performed for a single PHY device or for multiple PHY devices. Analysis for multiple PHY devices is performed for a group of PHY devices, which share the same configuration parameters, as discussed above. Thus, analysis for multiple devices is more efficient, as a plurality of devices can simultaneously attempt synchronization with the CO. As a result, many different configuration parameters can be simultaneously tested and determined from the various responses received from the CO.

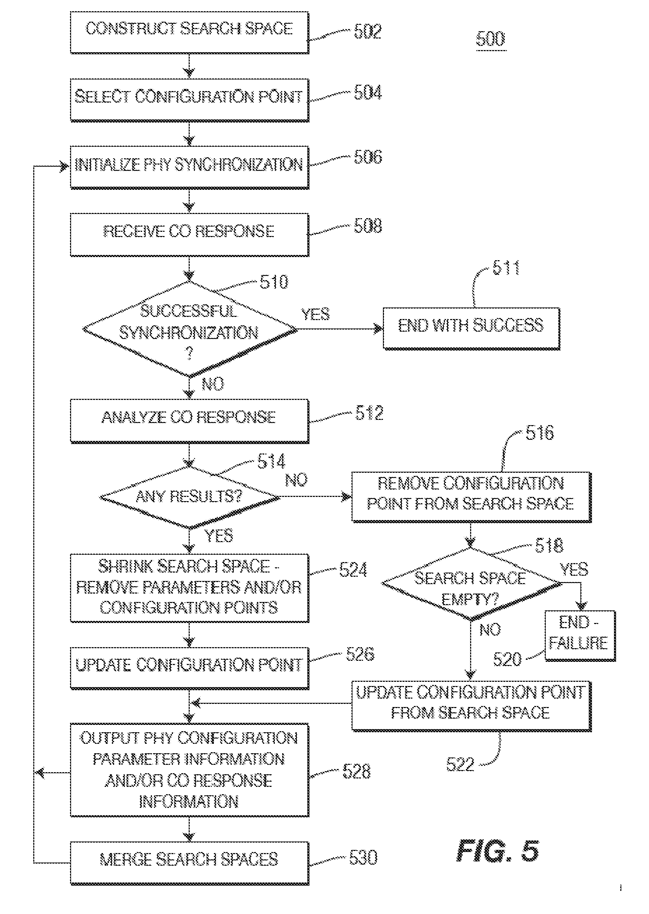

With reference now to FIG. 5, a block/flow diagram of a method or auto-detection process 500 for automatically detecting CO physical layer configuration parameters on a DSL network in accordance with one exemplary implementation of the present principles is illustrated. It should be understood that method 500 can be performed by a CPE device including the process management module and the auto-detection process module discussed above. In a particularly preferred exemplary implementation, the auto-detection process module can be configured to perform method 500.

Optionally, method 500 can begin at steps 502 and 504, in which a search space is constructed and an initial configuration point is selected, respectfully, as discussed above. In a preferred implementation, the search space is constructed on a master computing device and stored as standard software on CPE devices, during, for example, mass production of CPE devices. Similarly, the initial configuration point can be selected as a predetermined, random set of values by the master computing device or can be selected by the CPE based on DSLAM information, if available, for example.

At step 506, physical layer synchronization with the CO can be initialized by the CPE. Here, the CPE can be configured in accordance with the initial configuration point parameters, as discussed above. At step 508, the CPE can receive CO responses, which, of course, are sent by the CO in response to the synchronization attempt.

At step 510, it can be determined whether the CPE successfully synchronized with the CO using the configuration point parameters with which synchronization was initialized. Successful PHY synchronization is reached, for example, when the CPE PHY detects the synch-word of the PHY frame correctly for some specified time. If the synchronization is successful, then the process can end at step 511, as the configuration point parameters are correct. Otherwise, the process can continue to step 512.

At step 512, the CO responses can be analyzed to determine CO physical layer parameters, as discussed above. For example, the analysis can be performed in accordance with method 400, discussed above, in which parameter information is extracted from a CO response and compared to a set of pre-defined rules indicating whether parameter values in the search space are correct and/or incorrect. For example, rules can be based on startup procedure phase, as discussed above.

At step 514, it can be determined whether the analysis produced any results. For example, if the analysis did not produce any results in that no new information concerning the accuracy of parameter information has been extracted, then the process can continue to steps 516-522, in which the search space is examined directly for configuration point update and/or removal. For example, at step 516, the configuration point used to initialize synchronization in step 506 can be removed from the search space, as discussed above. Removal can comprise removing a configuration parameter completely from the search space. For example, as stated above, nodes can be deleted if a configuration point has failed to yield synchronization with the CO. Removal can also comprise removing an "unattempted parameter value" from the search space. An "unattempted parameter value" is defined herein as a parameter value that has not yet been included in any configuration point by which the CPE is configured during initiation of physical layer synchronization with the CO. Thereafter, at step 518, it can be determined whether the search space is empty. If the search space is empty, then the process fails because all CO physical layer configuration parameters have not been determined. Thus, a failure can be output to a user at step 520. Otherwise, step 522 can be performed in which the configuration point can be updated from the search space and the process can continue to step 528, discussed more fully below. For example, a new configuration point that is not yet attempted can be selected from the search space and used as a new configuration point in accordance with which the CPE can be configured during initialization of synchronization with the CO in another, subsequent iteration of the process.

Returning to step 514, if it is determined that the analysis of one or more CO responses has produced results, the resulting PHY configuration parameter information including incorrect and/or correct parameter values can be employed at step 524 to shrink the search space and remove parameter nodes and/or configuration points from the search space, as discussed above. For example, nodes determined to be incorrect in said analyzing step 512 can be deleted from the search space, as discussed above. Moreover, as discussed above, if a tree structure is used to construct the search space and if correct parameters have been determined from the CO response analysis, all sub-trees rooted by nodes sharing the same link list as the correct parameter value can be deleted. Thus, such sub-trees can correspond to one or more configuration parameters that are not included in any configuration point by which the CPE is configured during initiation of physical layer synchronization with the CO. In this way, the search space used in any subsequent iteration of the method 500 can be reduced by deleting unattempted configuration parameter values and/or configuration points, thereby significantly expediting the auto-detection process.

At step 526, the configuration point can be updated. For example, a new configuration point that is not yet attempted can be selected from the search space and used as a new configuration point in accordance with which the CPE can be configured during initialization of synchronization with the CO in another iteration of the process. Thus, steps 506-510 can be repeated and can branch to any one of steps 511 or 512. Similarly, steps subsequent to 512 can be repeated. For example, either steps 516 or 524, and their corresponding subsequent steps, can be repeated. As such, the process can continue until all parameters are CO PHY configuration parameters determined. Upon successful determination of the correct configuration point, the CPE can remain configured with the correct configuration point and thereby connect to the CO and the DSL network in accordance with standard operating procedure.

It should be noted that after completion of either step 526 or step 522, PHY configuration parameter information including incorrect and/or correct parameter values and/or CO response information can be output at step 528. For example, the PHY configuration parameter information can be output from an auto-detection process module to a process management module. The process management module can, in turn, during any iteration of the auto-detection process, merge the search space with one or more search spaces for other PHY devices in response to determining that CPE physical layer devices share the same CO physical layer configuration parameters. For example, the merging can be based on PHY configuration parameter information and/or CO response information received from several corresponding auto-detection process modules. In addition, the merger can be effected by sending a control signal to one or more auto-detection process modules to institute the merger of search spaces at step 530, for example. Like the search space shrinking described above, the merger significantly improves the efficiency of the auto-detection process, as it reduces the number of configuration points that are tested to determine CO PHY configuration parameters.

One means by which the process management module can determine the grouping of PHY devices includes employing pair-mode parameter settings of the PHY devices. For example, the process management module and the auto-detection process modules can first set pair-mode parameters in the initial configuration point based on a pre-determined assumption of the PHY device grouping that can be programmed in process management module software. Thereafter, a PHY handshake procedure can be attempted using the pair mode parameters. If the CPE receives a CO response message at some point in the auto-detection process indicating that the pair mode parameter setting is mismatched, then the pre-determined assumption is incorrect and the CPE attempts a different set of pair-mode parameters in a subsequent iteration. The CO response message can indicate the mismatch explicitly or implicitly. For example, if the indication is implicit, the CPE determines that there is a pair-mode mismatch using pre-defined mapping rules, discussed above. The process management module can be configured to receive and compile CO responses and/or parameter information for pair-modes from several PHY devices so that an informed adjustment to the pair-mode settings and PHY device grouping can be determined and instituted in a subsequent iteration of the auto-detection process. Based on grouping adjustments, the process management module can merge PHY devices, as discussed above. In addition, it should also be noted that the grouping can be adjusted or determined before, during or after detection of other PHY configuration parameters. The grouping determination can be referred to as "multiple analysis."

Implementations discussed above provide an efficient and convenient means for detecting CO PHY configuration parameters and configuring customer premise equipment in accordance with the detected parameters. The processes and systems discussed above do not require any user-intervention and are faster than currently known and used methods. For example, contracting the search space and merging search spaces as discussed above significantly reduce detection time, providing further ease and convenience to a user.

Having described preferred implementations for systems and methods for detecting CO PHY configuration parameters and configuring CPE devices (which are intended to be illustrative and not limiting), it is noted that modifications and variations can be made by persons skilled in the art in light of the above teachings. It is therefore to be understood that changes can be made in the particular implementations of the present principles disclosed which are within the scope of the invention as outlined by the appended claims. While the forgoing is directed to various exemplary implementations of the present principles, other and further implementations can be devised without departing from the basic scope thereof.

## Claims

1. A method (500), comprising:
automatically initiating (506) physical layer synchronization with a central office (CO) over a digital subscriber line (DSL) network with customer premises equipment (CPE) configured in accordance with a configuration point in a search space, the search space including different, interdependent physical layer configuration parameters;
analyzing (512) a CO response to the initiated synchronization to determine at least one of: whether at least one parameter value in the search space is correct or whether at least one parameter value in the search space is incorrect;
removing (524) at least one unattempted configuration parameter from said search space in response to said analyzing; and
repeating said initiating (506), analyzing (512) and removing (524) steps with the CPE configured in accordance with a different configuration point in said search space to determine the CO physical layer configuration parameters.

2. The method of claim 1, the analyzing (512) step further comprising:
determining the accuracy of parameter values by considering a startup procedure phase in which synchronization with the CO failed.

3. The method of claim 2, the startup procedure step further comprising:
including a tone phase, a message exchange phase and a training phase.

4. The method of claim 1, the analyzing step further comprising:
extracting (404) parameter information from a CO response; and
comparing (406) the parameter information with a set of pre-defined rules indicating at least one of: whether parameter values in the search space are correct or whether parameter values in the search space are incorrect.

5. The method of claim 4, the set of pre-defined rules step further comprising:
indicating that a capability (CAP) list parameter is incorrect if a failure occurred during a message exchange phase.

6. The method of claim 1, further comprising:
merging (530) said search space with a second search space in response to determining that CPE physical layer devices share the same CO physical layer configuration parameters.

7. The method of claim 1, the merging step further comprising:
compiling pair mode information from CO responses to determine grouping of PHY devices.

8. The method of claim 1, the search space step further comprising:
corresponding to a relationship tree and deleting at least one sub-tree of a parameter value determined to be correct in said analyzing step.

9. A system (100), comprising:
at least one physical layer (PHY) device (112a) configured to provide at least one pair connection to a central office (CO); and
at least one auto-detection process module (110a) configured to execute an auto-detection process by:
configuring said at least one PHY device in accordance with a configuration point in a search space, the search space including different, interdependent physical layer configuration parameters,
initiating physical layer synchronization with the CO over a digital subscriber line (DSL) network with said configured PHY device,
analyzing a CO response to the initiated synchronization to determine at least one of: whether at least one parameter value in the search space is correct or whether at least one parameter value in the search space is incorrect, removing at least one unattempted configuration parameter from said search space in response to said analyzing, and
repeating said initiating, analyzing and removing with the at least one PHY device configured in accordance with a different configuration point in said search space to determine the CO physical layer configuration parameters.

10. The system of claim 9, wherein it implements the method of any one of claims 1 to 8.

11. The system of claims 9 or 10, further comprising:
a process management module (108) configured to generate and schedule the execution of auto-detection processes.

12. The system of claim 11, wherein said process management module (108) is further configured to receive CO response information from said at least one auto-detection process module, determine that a group of said PHY devices share a common set of CO physical layer configuration parameters; and merge search spaces associated with each PHY device in said group.

13. The system of claim 11, wherein said process management module (108) is further configured to compile pair mode information from CO responses to determine grouping of PHY devices.

14. The system of claim 9, wherein said search space corresponds to a relationship tree and said removing comprises deleting at least one sub-tree of a parameter determined to be correct in said analyzing step.

15. A CPE device (102) including the system of any one of claims 9 to 14.
